# EUROPÄISCHE PATENTSCHRIFT

(11) **EP 0 702 180 B1**
(45) Veröffentlichungstag und Bekanntmachung des Hinweises auf die Patenterteilung: **01.04.1998**
(21) Anmeldenummer: 95810475.4
(22) Anmeldetag: 21.07.1995
(51) Int. Cl.: F16L 3/04

(54) **Rohr- und Kabelschelle mit Fussteil und Aufnahmebügel**
Pipe and cable clamp having a base section and a receiving bracket
Collier de serrage pour tuyaux et câbles comprenant une partie de pied et un étrier de réception

(30) Priorität: 15.09.1994 DE 4432780
(43) Veröffentlichungstag der Anmeldung: 20.03.1996
(73) Patentinhaber: HILTI Aktiengesellschaft, 9494 Schaan (LI)
(72) Erfinder: Janssen, Rupert, A-6812 Meiningen (AT); Guillon, Luc, CH-9468 Sax (CH); Fröwis, Markus, A-6820 Frastanz (AT)
(74) Vertreter: Wildi, Roland

(56) Entgegenhaltungen:
- DE-C- 2 633 528
- DE-U- 9 004 269

## Beschreibung

Die Erfindung betrifft eine Rohr- und Kabelschelle mit Fussteil zum Festlegen an Bauteilen und wenigstens einem vom Fussteil abragenden, im wesentlichen bogenförmigen Aufnahmebügel mit freiem Ende zum Aufnehmen der Rohre und Kabel in wenigstens einem vom Aufnahmebügel gebildeten Aufnahmeraum.

Schellen der hier in Rede stehenden Art dienen der Befestigung von Rohren und Kabeln an Bauteilen. Dabei handelt es sich um Rohre für Installationen jeglicher Art sowie um Kabel wie Elektrokabel und dergleichen.

Befestigt werden die Rohre und Kabel in der Weise, dass sie von einem Aufnahmebügel der Schelle teilweise umschlungen werden und ein Fussteil der Schelle am jeweiligen Bauteil festgelegt wird. Die Festlegung des Fussteiles am Bauteil kann auf verschiedenste Weisen erfolgen, so beispielsweise mittels Befestigungselementen in Form von direkt eintreibbaren Nägeln oder in Form von Dübeln. Darüber hinaus besteht auch die Möglichkeit, das Fussteil unmittelbar am Bauteil festzulegen, beispielsweise mittels Kleben, Schweissen oder formschlüssiger Verbindung, beispielsweise in einer entsprechend ausgebildeten Bohrung.

Der Aufnahmebügel der Schellen kann im einzelnen verschiedenartig ausgebildet sein. Eine weit verbreitete Ausbildung besteht in einer im wesentlichen bogenförmigen Gestaltung, so dass zwischen dem Fussteil und dem freien Ende ein Aufnahmeraum gebildet wird. Dieser Aufnahmeraum kann formmässig derart gestaltet sein, dass er zum Aufnehmen eines oder mehrerer Rohre und Kabel geeignet ist. Die Anzahl der vom Fussteil abragenden Aufnahmebügel ist nicht nur auf einen beschränkt, so können für bestimmte Befestigungen auch zwei oder mehr Aufnahmebügel von ein und demselben Fussteil abragen.

Die an den Bauteilen zu befestigenden Rohre und Kabel variieren je nach Anwendungsfall und Verwendungszweck in ihrem Durchmesser ausserordentlich stark. Da die zur Anwendung gelangenden Rohr- und Kabelschellen in der Regel aus einem mehr oder weniger stark elastischen Material, wie beispielsweise Kunststoff, gebildet sind, kann eine bestimmte Variation der Durchmesser durch diese Elastizität überbrückt werden. Liegt die Variation der Durchmesser jedoch ausserhalb gewisser Grenzen, müssen Schellen unterschiedlicher Grösse zur Anwendung kommen, was die Wirtschaftlichkeit stark beeinträchtigt, da die Produzenten einerseits verschiedene Werkzeuge benötigen und andererseits die Lagerhaltung dadurch sowohl beim Produzenten als auch beim Anwender wesentlich aufwendiger wird.

So sind nebst der Ausnutzung der reinen Elastizität weitere Massnahmen bekannt geworden, wie beispielsweise die aus der DE-A- 26 33 528 bekannte Rohr- und Kabelschelle zeigt. In diesem bekannten Falle ist die Aufstandsfläche des Fussteiles unter einem bestimmten Winkel geneigt, so dass sich die Rohr- und Kabelschelle in verschiedenen Neigungslagen festlegen lässt.

Selbst diese bekannte Massnahme kann in Verbindung mit der Elastizität bei weitem nicht alle Anforderungen hinsichtlich Variation der Durchmesser erfüllen. Zudem entstehen bei der Positionierung der Rohr- und Kabelschelle vor deren Festlegung gewisse Unsicherheiten, da das Fussteil keine einwandfrei definierte Standfläche aufweist.

Der Erfindung liegt die Aufgabe zugrunde, eine Rohr- und Kabelschelle zu schaffen, die sich für die Aufnahme von Rohren und Kabeln mit unterschiedlichem Durchmesser eignet und sich ausserdem problemlos am jeweiligen Bauteil festlegen lässt.

Erfindungsgemäss wird die Aufgabe dadurch gelöst, dass der Aufnahmebügel der Rohr- und Kabelschelle im Abstand vom freien Ende ein das Einklappen des freien Endbereiches in den Aufnahmeraum erlaubendes Gelenk mit einer parallel zur Zentralachse des Aufnahmeraumes verlaufenden Schwenkachse aufweist.

Die erfindungsgemässe Anordnung eines Gelenkes führt zu einer Variation der Grösse des Aufnahmeraumes der Rohr- und Kabelschelle. Das Einklappen des freien Endbereiches des Aufnahmebügels verkleinert den Aufnahmeraum. Da das Gelenk nur in den Aufnahmeraum einklappbar ist, trägt der freie Endbereich des Aufnahmebügels in nicht eingeklapptem Zustand vollumfänglich zum Umschlingen der Rohre und Kabel bei.

Ist mit der erfindungsgemässen Rohr- und Kabelschelle ein Rohr und Kabel von geringerem Durchmesser zu befestigen, klappt der freie Endbereich des Aufnahmebügels unter Aufstehen auf dem Bauteil ein und ermöglicht so eine Verkleinerung des Aufnahmeraumes derart, dass das Rohr und Kabel von kleinerem Durchmesser ausreichend befestigt ist. Wird dagegen ein Rohr und Kabel von grösserem Durchmesser an einem Bauteil befestigt, vergrössert sich aufgrund der Elastizität der Rohr- und Kabelschelle der Aufnahmeraum beim Festlegen des Fussteiles am Bauteil. Trotz der Vergrösserung des Aufnahmeraumes bleibt eine ausreichende Umschlingung der zu befestigenden Rohre und Kabel vorhanden, da auch der freie Endbereich aufgrund der besonderen Ausbildung des Gelenkes dazu beiträgt. Ein ungewolltes Lösen auch von Rohren und Kabeln mit grösserem Durchmesser wird dadurch verhindert.

Zur Erzielung einer ausreichenden Variation der Grösse des Aufnahmeraumes entspricht zweckmässigerweise der Abstand des Gelenkes vom freien Ende dem 0,2- bis 0,4-fachen des gesamten Bogenmasses des Aufnahmebügels.

Insbesondere im Hinblick auf die Verkleinerung des Aufnahmeraumes durch Einklappen des freien Endbereiches des Aufnahmebügels ist es von Vorteil, wenn das Gelenk im wesentlichen in der von der dem Bauteil zugewandten Stimseite des Fussteiles gebildeten Ebene liegt. Dadurch wird erreicht, dass beim Festlegen des Fussteiles am Bauteil durch Aufliegen des freien Endbreiches der Aufnahmeraum sich so weit verkleinert, bis die zu befestigenden Rohre und Kabel ausreichend befestigt werden.

Beispielsweise bei Verwendung von Kunststoff als Material für die Rohr- und Kabelschellen bietet sich als Ausbildung des Gelenkes zweckmässigerweise eine Querschnittschwächung des Aufnahmebügels an.

Zur Sicherstellung, dass der von der Querschnittschwächung abgetrennte freie Endbereich des Aufnahmebügels nur in den Aufnahmeraum einklappbar ist, besteht vorzugsweise der Restquerschnitt der Querschnittschwächung aus einem parallel zur Zentralachse des Aufnahmeraumes verlaufenden Steg, der ausserdem dem Aufnahmeraum benachbart angeordnet ist. Die nach aussen an den Steg anschliessenden Bereiche des mit der Querschnittschwächung versehenen Aufnahmebügels bilden ein ausreichendes Widerlager, welches einem Ausklappen des freien Endbereiches nach aussen entgegenwirkt. Somit ist gewährleistet, dass der vom Gelenk abgetrennte freie Endbereich des Aufnahmebügels beim Befestigen von Rohren und Kabeln grösseren Durchmessers zur Halterung aufgrund seiner Umschlingung beiträgt.

Die Erfindung wird nachstehend anhand von Zeichnungen beispielhaft erläutert. Es zeigen:
- Fig. 1: eine Rohr- und Kabelschelle gemäss Erfindung;
- Fig. 2: die Rohr- und Kabelschelle der Fig. 1 mit einem befestigten Rohr von kleinerem Durchmesser;
- Fig. 3: die Rohr- und Kabelschelle gemäss Fig. 1 mit einem befestigten Rohr von grösserem Durchmesser.

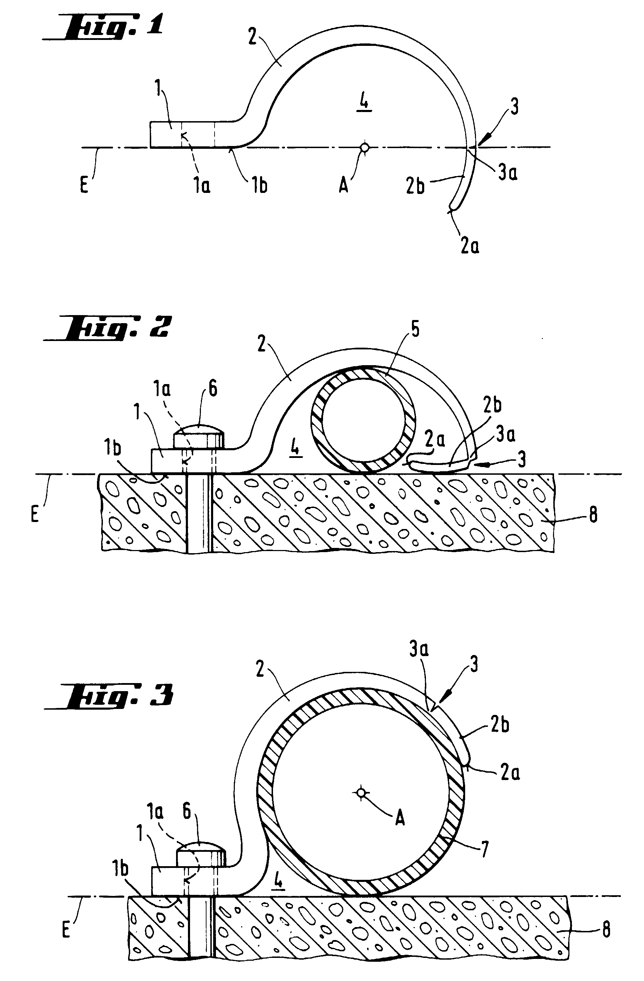

Fig. 1 zeigt eine Rohr- und Kabelschelle mit Fussteil 1 und Aufnahmebügel 2. Im Abstand vom freien Ende 2a weist der Aufnahmebügel 2 ein Gelenk 3 in Form einer Querschnittschwächung auf. Der Restquerschnitt dieser Querschnittschwächung ist als Steg 3a ausgebildet, welcher parallel zur Zentralachse A eines vom Aufnahmebügel 2 umschlossenen Aufnahmeraumes 4 verläuft. Wie die Figur 1 ferner verdeutlicht, liegt das Gelenk 3 in der durch eine strichpunktierte Linie angedeuteten, von der Stimseite 1b des Fussteiles 1 gebildeten Ebene E.

Wie bereits darauf hingewiesen, kann die Rohr- und Kabelschelle in verschiedenartiger Weise über das Fussteil 1 an einem Bauteil festgelegt werden. Beispielsweise im Falle der Verwendung von nagel- oder dübelartigen Befestigungselementen bietet es sich an, das Fussteil 1 mit einer Durchgangsbohrung 1a zu versehen, welche der Aufnahme eines diesbezüglichen Befestigungselementes dient.

Die Figuren 2 und 3 zeigen Anwendungsfälle der Rohr- und Kabelschelle gemäss Figur 1 in Verbindung mit einem Bauteil 8.

Im Anwendungsfalle gemäss Figur 2 ist ein Rohr 5 von kleinerem Durchmesser am Bauteil 8 befestigt worden. Zu diesem Zwecke ist der Fuss 1 mittels eines Befestigungselementes 6 am Bauteil 8 festgelegt. Aufgrund des Gelenkes 3 ist der freie Endbereich 2b des Aufnahmebügels 2 unter Aufstehen auf dem Bauteil 8 in den Aufnahmeraum 4 eingeklappt, so dass sich der Aufnahmeraum 4 verkleinert hat und somit die Rohr- und Kabelschelle das befestigte Rohr 5 in ausreichender Weise spannt.

Beim Anwendungsfall gemäss Figur 3 ist am Bauteil 8 ein Rohr 7 von grösserem Durchmesser befestigt worden. Zu diesem Zwecke ist mittels des Befestigungselementes 6 das Fussteil 1 am Bauteil 8 festgelegt, wobei sich aufgrund der Elastizität der Aufnahmebügel 2 gegenüber dem Fussteil 1 leicht aufgebogen hat. Dadurch ist insgesamt eine Vergrösserung des Aufnahmeraumes 4 entstanden. Die Figur 3 zeigt deutlich, wie trotz der Vergrösserung des Aufnahmeraumes 4 der Aufnahmebügel 2 eine ausreichende Umschlingung des Rohres 7 sicherstellt, wobei auch der freie Endbereich 2b zu dieser Umschlingung beiträgt, da aufgrund der erfindungsgemässen Ausbildung des Gelenkes 3 der freie Endbereich 2b gegen ein Ausklappen nach aussen gesichert ist.

Als Material für die Rohr- und Kabelschelle gemäss Erfindung bietet sich Kunststoff an. Für die Befestigung mehrerer Rohre und Kabel nebeneinander besteht die Möglichkeit, den Aufnahmebügel derart zu gestalten, dass mehrere Aufnahmeräume hintereinander entstehen, wobei in einem solchen Falle es sich anbietet, den zum freien Ende hin letzten Aufnahmeraum durch Anordnen eines Gelenkes in seiner Grösse variierbar zu gestalten. Ebenso besteht die Möglichkeit, das Fussteil und die Anordnung der Anzahl an Aufnahmebügeln an einem entsprechenden Fussteil zu variieren.

## Patentansprüche

1. Rohr- und Kabelschelle mit einem Fussteil (1) zum Festlegen an Bauteilen (8) und wenigstens einem vom Fussteil (1) abragenden, im wesentlichen bogenförmigen Aufnahmebügel (2) mit freiem Ende (2a) zum Aufnehmen der Rohre (5, 7) und Kabel in wenigstens einem vom Aufnahmebügel (2) gebildeten Aufnahmeraum (4), **dadurch gekennzeichnet,** dass der Aufnahmebügel (2) im Abstand vom freien Ende (2a) ein das Einklappen des freien Endbereiches (2b) in den Aufnahmeraum (4) erlaubendes Gelenk (3) mit einer parallel zur Zentralachse (A) des Aufnahmeraumes (4) verlaufenden Schwenkachse aufweist.

2. Rohr- und Kabelschelle nach Anspruch 1, dadurch gekennzeichnet, dass der Abstand des Gelenkes (3) vom freien Ende (2a) dem 0,2- bis 0,4-fachen des gesamten Bogenmasses des Aufnahmebügels (2) entspricht.

3. Rohr- und Kabelschelle nach Anspruch 1 oder 2, dadurch gekennzeichnet, dass das Gelenk (3) im wesentlichen in der von der dem Bauteil (8) zugewandten Stimseite (1b) des Fussteiles (1) gebildeten Ebene (E) liegt.

4. Rohr- und Kabelschelle nach einem der Ansprüche 1 bis 3, dadurch gekennzeichnet, dass das Gelenk (3) von einer Querschnittschwächung des Aufnahmebügels (2) gebildet ist.

5. Rohr- und Kabelschelle nach Anspruch 4, dadurch gekennzeichnet, dass der Restquerschnitt der Querschnittschwächung als parallel zur Zentralachse (A) des Aufnahmeraumes (4) verlaufender, dem Aufnahmeraum (4) benachbart angeordneter Steg (3a) ausgebildet ist.

## Claims

1. Pipe and cable clamp comprising a base section (1) for fixing to assembly components (8) and at least one essentially arced receiving bracket (2), which protrudes from the base section (1), having a free end (2a) for receiving the pipes (5, 7) and cables in at least one receiving area (4) which is formed by the receiving bracket (2), **characterised in that** the receiving bracket (2) comprises at a distance from the free end (2a) a hinge (3) having a pivotal axis extending parallel to the central axis (A) of the receiving area (4) which permits the free end area (2b) to fold into the receiving area (4).

2. Pipe and cable clamp according to Claim 1, **characterised in that** the distance of the hinge (3) from the free end (2a) equals between 0.2 and 0.4 times the entire arc dimension of the receiving bracket (2).

3. Pipe and cable clamp according to Claim 1 or 2, **characterised in that** the hinge (3) lies essentially in the plane (E) which is established by the end surface (1b) of the base section (1) facing towards the assembly component (8).

4. Pipe and cable clamp according to one of Claims 1 to 3, **characterised in that** the hinge (3) is formed by a cross-sectional weakening of the receiving bracket (2).

5. Pipe and cable clamp according to Claim 4, **characterised in that** the remaining cross-section of the cross-sectional weakening is designed as a web (3a) which extends parallel to the central axis (A) of the receiving chamber (4) and adjacent the receiving area (4).

## Revendications

1. Collier pour tuyaux et câbles, comprenant une partie de pied (1) à fixer sur des éléments de construction (8) et au moins un étrier de réception sensiblement arqué (2) qui dépasse de la partie de pied (1), qui comporte une extrémité libre (2a) et qui est destiné à recevoir les tuyaux (5, 7) et les câbles dans au moins un espace de réception (4) formé par l'étrier de réception (2), caractérisé en ce que, à distance de l'extrémité libre (2a), l'étrier de réception (2) comporte une articulation (3) dont l'axe de pivotement s'étend parallèlement à l'axe central (A) de l'espace de réception (4) et qui permet à la zone d'extrémité libre (2b) de se rabattre dans l'espace de réception (4).

2. Collier pour tuyaux et câbles selon la revendication 1, caractérisé en ce que la distance entre l'articulation (3) et l'extrémité libre (2a) correspond à une valeur comprise entre 0,2 et 0,4 fois la dimension totale de l'arc de l'étrier de réception (2).

3. Collier pour tuyaux et câbles selon la revendication 1 ou 2, caractérisé en ce que l'articulation (3) se trouve sensiblement dans le plan (E) formé par la face frontale (1b) de la partie de pied (1) tournée vers l'élément de construction (8).

4. Collier pour tuyaux et câbles selon l'une des revendications 1 à 3, caractérisé en ce que l'articulation (3) est formée par un rétrécissement de section de l'étrier de réception (2).

5. Collier pour tuyaux et câbles selon la revendication 4, caractérisé en ce que la section restante du rétrécissement de section forme un isthme (3a) qui s'étend parallèlement à l'axe central (A) de l'espace de réception (4) et qui se trouve au voisinage de l'espace de réception (4).
